# EUROPÄISCHE PATENTSCHRIFT

(11) **EP 2 360 767 B1**
(45) Veröffentlichungstag und Bekanntmachung des Hinweises auf die Patenterteilung: **24.08.2016**
(21) Anmeldenummer: 11152452.6
(22) Anmeldetag: 28.01.2011
(51) Int. Cl.: H01M 8/0662

(54) **Brennstoffzellensystem**
Fuel cell system
Système de cellules combustibles

(30) Priorität: 12.02.2010 EP 10153483
(43) Veröffentlichungstag der Anmeldung: 24.08.2011
(73) Patentinhaber: Hexis AG, 8404 Winterthur (CH)
(72) Erfinder: Mai, Andreas, 78462, Konstanz (DE); Haberstock, Dirk, 79790, Kandelburg (DE); Denzler, Roland, 8484, Weisslingen (CH); Sfeir, Josef, 8180, Bülach (CH)
(74) Vertreter: Intellectual Property Services GmbH

(56) Entgegenhaltungen:
- WO-A1-2007/093148
- DE-A1-102006 031 863
- DE-C1- 19 926 751
- US-A1- 2005 142 398
- US-A1- 2008 047 826

## Beschreibung

Die Erfindung betrifft ein Brennstoffzellensystem gemäss Oberbegriff von Anspruch 1 sowie eine Vorrichtung und ein Verfahren für Brennstoffzellensysteme gemäss Oberbegriff von Anspruch 7 beziehungsweise Oberbegriff von Anspruch 12.

Ein typisches Brennstoffzellensystem ist aus Dokument EP1 037 296 A1 bekannt. In diesem Brennstoffzellensystem bilden die Zellen einen zylindrischen Zellenstapel, an dessen Peripherie in axial ausgerichteten Kammern eine Nachverbrennung durchgeführt wird, wobei ein Abgas von rund 1000 °C entsteht. Zwischen den Nachverbrennungskammern befinden sich Eintrittsstellen, durch die den Zellen vorgeheizte Prozessluft (kurz Luft) für stromliefernde, elektrochemische Reaktionen zugeführt wird. Ein Brenngas wird über einen axialen Kanal im Zentrum des Stapels auf die Zellen verteilt.

Ein Brennstoffzellensystem umfasst in der Regel einen Stapel mit planaren Zellen, in dem alternierend plattenförmige Interkonnektoren, auch bipolare Platten genannt, und elektrochemisch aktive Scheiben angeordnet sind. Die elektrochemisch aktiven Scheiben enthalten jeweils mindestens drei Lagen, nämlich eine Positive Elektrode, einen Elektrolyten, zum Beispiel einen Feststoff-Elektrolyten, und eine Negative Elektrode, weshalb die elektrochemisch aktiven Scheiben auch als PEN-Elemente bezeichnet werden. Die Interkonnektoren vermitteln einerseits Kontakte zwischen den Elektroden benachbarter PEN-Elemente und enthalten andererseits Kanäle, um den PEN-Elementen Brenngas und Sauerstoffträger für die elektrochemischen Reaktionen zuzuführen.

Das oben beschriebene planare Zellenkonzept ermöglicht kurze Verbindungen mit geringem Widerstand durch die Serieschaltung von Elektroden, Elektrolyten und bipolaren Platten im Stapel. Dadurch können die ohmschen Verluste der in Serie geschalteten Elemente tief gehalten werden. Für die bipolare Platten werden typischerweise temperaturbeständige Materialien verwendet, welche die erforderliche Langzeitstabilität von > 40'000 Stunden erreichen können. Im Betrieb des Zellenstapels bei Temperaturen von 600° - bis 1000°C haben sich elektrisch leitende, metallische Werkstoffe mit mindestens 15% Chromanteil bewährt. Durch die Ausbildung einer dichten Chromoxidschicht, die sich im Betrieb in den Luft- und Gas-Atmosphären gemäss Thermodynamik bildet, werden diese Werkstoffe gegen Korrosion durch die Betriebsgase geschützt. Da Chromoxid eine genügende elektrische Leitfähigkeit aufweist, wird der unbedingt erforderliche elektrische Stromfluss durch den Stapel nicht behindert.

Es ist aber auch bekannt, dass sich über einer festen Chromoxidschicht in Atmosphären, die Sauerstoff und/oder Wasserdampf enthalten, gemäss Thermodynamik gasförmige Chromspezies bilden können, beispielsweise auf Grund folgender Reaktionen:

Cr₂O₃ (s) + 3/2 O₂ (g) ↔ 2 CrO₃ (g) (I)

Cr₂O₃ (s) + 3/2 O₂ (g) + 2 H₂O (g) ↔ 2 CrO₂(OH)₂ (g) (II)

Diese Chromspezies können wiederum die Funktion der sauerstoffseitigen (positiven) Elektrode, auch Kathode genannt, auf Dauer beeinträchtigen. Die Beeinträchtigung der Kathode konnte aber durch eine auf der Kathodenseite der bipolaren Platte aufgebrachte Schutzschicht, die den Kontakt von Wasserdampf mit der Chromoxidschicht verhindert, vermindert werden.

Bei längeren Betriebszeiten (> 1000 Stunden) hat sich jedoch gezeigt, dass sich im Abgaskondensat des Systems bedeutende Mengen von Chrom (Gesamtgehalt 5 mg/ℓ) nachweisen lassen. Von diesem Gesamtgehalt liegen ca. 50% als hexavalentes Chrom vor. Das hexavalente Chrom stellt eine Gefahr für die Umwelt dar und führt zu aufwendigen Massnahmen im Betrieb und bei der Wartung und Entsorgung des Systems. Das Kondensat ist in diesem Fall mit spezieller Vorsicht zu behandeln, um eine Gefährdung von Mensch und Umwelt zu vermeiden. Die Quelle für die Chromverschmutzung liegt in den Cr-haltigen metallischen Werkstoffen, die in den bipolaren Platten wie auch in weiteren Teilen wie Wärmetauscher, Nachbrenner und Rohrsystem verwendet werden. Die auf der Kathodenseite erprobten Schutzschichten gegen die Freisetzung von gasförmigen Chromspezies tragen zwar zur Reduktion der Chrommenge bei, sind aber in der Regel nicht ausreichend, um die Gefährdung, die vom hexavalenten Chrom in Abgas und Abgaskondensat ausgeht, zu verhindern.

Aus Dokument DE 199 26 751 C1 ist ein Verfahren bekannt, in welchem die in der Abluft enthaltenen Chromate in einer Waschlösung ausgefällt werden.

Aufgabe der Erfindung ist es, ein Brennstoffzellensystem sowie eine Vorrichtung und ein Verfahren für Brennstoffzellensysteme zur Verfügung zu stellen, mit welchen der Chromgehalt im Abgas und Abgaskondensat des Brennstoffzellensystems vermindert werden kann.

Diese Aufgabe wird erfindungsgemäss durch das in Anspruch 1 definierte Brennstoffzellensystem sowie die in Anspruch 7 definierte Vorrichtung und das in Anspruch 12 definierte Verfahren gelöst.

Das erfindungsgemässe Brennstoffzellensystem enthält einen Zellenstapel zur Durchführung elektrochemischer Reaktionen, der mit Einlässen für einen Sauerstoffträger und/oder ein Trägergas und für Brenngas und/oder Wasserdampf und mit Auslässen für Abgase versehen ist. Das Brennstoffzellensystem umfasst zusätzlich wenigstens eine Vorrichtung mit einer gasdurchlässigen Struktur, wie beispielsweise einer porösen oder wabenförmigen Struktur, welche eine Substanz enthält, die mit gasförmigen Chromspezies reagiert, oder welche mit einer derartigen Substanz versehen ist, wobei die Vorrichtung mit wenigstens einem der Auslässe in Verbindung steht, um Abgase durch die Vorrichtung zu leiten und Chromspezies abzuscheiden, die von den Abgasen mitgeführt werden.

Der Begriff "Abgase" wird im Folgenden breit ausgelegt und umfasst sämtliche gasförmigen Stoffe, die vom Zellenstapel oder von anderen Komponenten des Brennstoffzellensystems wie beispielsweise einem Nachbrenner abgegeben werden. Abhängig von der jeweiligen Anwendung können die Abgase Reaktionsprodukte der im Zellenstapel ablaufenden elektrochemischen Reaktion enthalten, zum Beispiel CO₂, CO, H₂O, H₂ oder O₂, oder nicht umgesetzte Anteile des Sauerstoffträgers, Trägergases, Brenngases oder zugeführten Wasserdampfs.

Die gasdurchlässige Struktur der Vorrichtung ist vorteilhafterweise fest und kann aus Metalloberflächen gebildet werden, die mit der Substanz beschichtet sind, oder aus keramischem Schaum hergestellt sein, der die Substanz enthält oder der aus einem inerten keramischen Material besteht, das mit der Substanz beschichtet ist.

Die mit gasförmigen Chromspezies reagierende Substanz umfasst insbesondere feste Substanzen, die bei Reaktionstemperaturen von typisch 400 °C bis 1000 °C spontan mit gasförmigen Chromspezies reagieren. Die mit gasförmigen Chromspezies reagierende Substanz kann beispielsweise ein Karbonat oder Oxid eines der Elemente Mg, Ca, Sr, Ba, Sc, Y, La sowie Lanthanoide oder ein Mischoxid von mindestens zwei der Elemente Mg, Ca, Sr, Ba, Sc, Y, La sowie Lanthanoide oder eine Oxidkeramik mit Perowskitstruktur sein.

Vorteilhafterweise ist die Vorrichtung, abgesehen von Anschlüssen, in geschlossener Bauweise ausgeführt. Typisch ist die Vorrichtung ausserhalb des Zellenstapels angeordnet.

In einer vorteilhaften Ausführungsform umfasst das Brennstoffzellensystem zusätzlich einen Nachbrenner, um im Abgas enthaltenes Brenngas, das im Zellstapel nicht umgesetzt wurde, zu verbrennen, wobei die Vorrichtung nach dem Nachbrenner angeordnet sein kann.

In einer weiteren vorteilhaften Ausführungsform sind die Auslässe für Abgase, die nicht umgesetztes Brenngas enthalten, über eine Abzweigung und eine zusätzliche Vorrichtung mit einer Brenngaszuführung des Zellenstapels verbunden sind, um Wasserdampf und nicht umgesetztes Brenngas zu rezirkulieren, wobei die zusätzliche Vorrichtung eine gasdurchlässige Struktur, beispielsweise eine poröse oder wabenförmige Struktur umfasst, welche eine Substanz enthält, die mit gasförmigen Chromspezies reagiert, oder welche mit einer derartigen Substanz versehen ist.

In einer weiteren vorteilhaften Ausführungsform umfasst das Brennstoffzellensystem zusätzlich eine Wärmedämmung, welche den Zellenstapel und gegebenenfalls einen Nachbrenner und/oder sonstigen Brenner des Brennstoffzellensystems umschliesst, wobei die Vorrichtung oder Vorrichtungen zweckmässigerweise innerhalb der Wärmedämmung angeordnet sind.

Die erfindungsgemässe Vorrichtung für Brennstoffzellensysteme, welche einen Zellenstapel zur Durchführung elektrochemischer Reaktionen enthalten, der mit Einlässen für einen Sauerstoffträger und/oder ein Trägergas und für Brenngas und/oder Wasserdampf und mit Auslässen für Abgase versehen ist, umfasst eine gasdurchlässige Struktur, beispielsweise eine poröse oder wabenförmige Struktur, welche eine Substanz enthält, die mit gasförmigen Chromspezies reagiert, oder welche mit einer derartigen Substanz versehen ist, wobei die Vorrichtung mit wenigstens einem der Auslässe des Zellenstapels oder einem Nachbrenner des Brennstoffzellensystems koppelbar ist, um Abgase durch die Vorrichtung zu leiten und Chromspezies abzuscheiden, die von den Abgasen mitgeführt werden.

Die gasdurchlässige Struktur der Vorrichtung ist vorteilhafterweise fest und kann aus Metalloberflächen gebildet werden, die beispielsweise wabenförmig angeordnet sind, und die mit der Substanz beschichtet sind, oder aus keramischem Schaum hergestellt sein, der die Substanz enthält oder der aus einem inerten keramischen Material wie beispielsweise Al₂O₃ besteht, das mit der Substanz beschichtet ist.

Vorteilhafterweise ist die gasdurchlässige Struktur porös und weist eine Porenverteilung von 10 - 20 Poren pro 2,54 cm (pores per inch [ppi]) auf. Hierbei wird die Anzahl Poren auf einer linearen Achse angegeben. Eine entsprechende Klassifizierung findet sich beispielsweise in der ASTM-Norm D 3576-77.

Die mit gasförmigen Chromspezies reagierende Substanz kann beispielsweise ein Karbonat oder Oxid eines der Elemente Mg, Ca, Sr, Ba, Sc, Y, La sowie Lanthanoide oder ein Mischoxid von mindestens zwei der Elemente Mg, Ca, Sr, Ba, Sc, Y, La sowie Lanthanoide oder eine Oxidkeramik mit Perowskitstruktur sein. Oxidkeramiken mit Perowskitstruktur haben die Zusammensetzung ABO₃. Die A-Position in der Struktur können die Elemente Mg, Ca, Sr, Ba und Sc, Y, La sowie Lanthanoide einnehmen. Bei der B-Position sind rund 50 verschiedene Elemente bekannt. Typisch ist die B-Position zum Beispiel mit Ti, Zr, V, Nb, Mn, Fe, oder Co besetzt. Die A- oder B- Position kann jeweils auch von zwei unterschiedlichen Elementen besetzt sein. Derartige Kristalle werden Mischkristalle genannt.

Mit Vorteil ist die Vorrichtung, abgesehen von Anschlüssen, in geschlossener Bauweise ausgeführt. Die gasdurchlässige Struktur kann dazu zum Beispiel in einem Rohr oder in einer Durchführung oder Öffnung des Brennstoffzellensystems angeordnet sein.

In dem erfindungsgemässen Verfahren für Brennstoffzellensysteme, die einen Zellenstapel zur Durchführung elektrochemischer Reaktionen enthalten, der mit Einlässen für einen Sauerstoffträger und/oder ein Trägergas und für Brenngas und/oder Wasserdampf und mit Auslässen für Abgase versehen ist, wird im Zellenstapel eine elektrochemische Reaktion durchgeführt und Abgas erzeugt. Das Verfahren zeichnet sich dadurch aus, dass Abgas aus dem Zellstapel durch eine Vorrichtung, insbesondere durch eine der oben stehend beschriebenen Vorrichtungen, geleitet wird, die eine gasdurchlässige Struktur, beispielsweise eine poröse oder wabenförmige Struktur, umfasst, welche eine Substanz enthält, die mit gasförmigen Chromspezies reagiert, oder welche mit einer derartigen Substanz versehen ist, und dass in der Vorrichtung Chromspezies abgeschieden werden, die von den Abgasen mitgeführt werden. Zweckmässigerweise umfassen die abgeschiedenen Chromspezies hexavalente Chromverbindungen.

In einer vorteilhaften Ausführungsform des Verfahrens ist die elektrochemische Reaktion stromerzeugend, wobei dem Zellenstapel ein Brenngas und ein Sauerstoffträger zugeführt werden, und wobei das Abgas aus dem Zellenstapel der Vorrichtung direkt oder über einen Nachbrenner zugeführt wird.

In einer weiteren vorteilhaften Ausführungsform des Verfahrens ist die elektrochemische Reaktion eine Hydrolyse, wobei dem Zellenstapel Wasserdampf und ein Trägergas sowie Strom zugeführt werden.

Das Brennstoffzellensystem sowie die Vorrichtung und das Verfahren für Brennstoffzellensysteme gemäss vorliegender Erfindung haben den Vorteil, dass das aus dem Abgas abgeschiedene Chrom in gebundener Form in einer festen Substanz vorliegt, die sicher entsorgt werden kann.

Die obige Beschreibung von Ausführungsformen und -varianten dient lediglich als Beispiel. Weitere vorteilhafte Ausführungsformen gehen aus den abhängigen Ansprüchen und der Zeichnung hervor.

Im Folgenden wird die Erfindung an Hand der Ausführungsbeispiele und an Hand der Zeichnung näher erläutert. Es zeigen:
- Fig. 1: ein Ausführungsbeispiel eines Brennstoffzellensystems gemäss vorliegender Erfindung,
- Fig. 2: ein zweites Ausführungsbeispiel eines Brennstoffzellensystems gemäss vorliegender Erfindung,
- Fig. 3: ein drittes Ausführungsbeispiel eines Brennstoffzellensystems gemäss vorliegender Erfindung, und
- Fig. 4: ein Ausführungsbeispiel einer Vorrichtung für ein Brennstoffzellensystem gemäss vorliegender Erfindung.

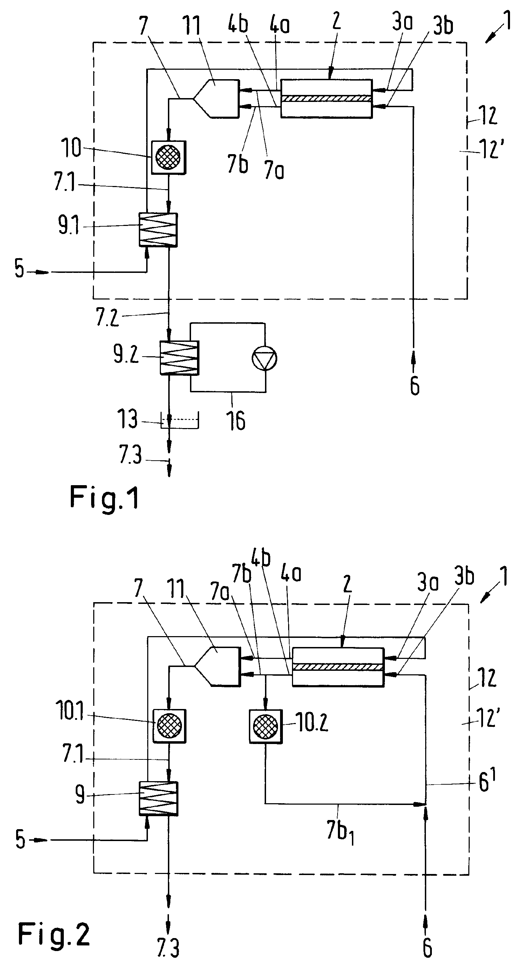

Fig. 1 zeigt ein Ausführungsbeispiel eines Brennstoffzellensystems gemäss vorliegender Erfindung. Das gezeigte Brennstoffzellensystem 1 enthält einen Zellenstapel 2 zur Durchführung elektrochemischer Reaktionen, der mit Einlässen 3a, 3b für einen Sauerstoffträger 5, wie zum Beispiel Luft, und für Brenngas 6, wie zum Beispiel ein Kohlenwasserstoff, und mit Auslässen 4a, 4b für Abgase 7a, 7b versehen ist. Das Brennstoffzellensystem 1 umfasst zusätzlich wenigstens eine Vorrichtung 10 mit einer gasdurchlässigen Struktur, beispielsweise einer porösen oder wabenförmigen Struktur, welche eine Substanz enthält, die mit gasförmigen Chromspezies reagiert, oder welche mit einer derartigen Substanz versehen ist, wobei die Vorrichtung mit wenigstens einem der Auslässe 4a, 4b in Verbindung steht, um Abgase 7, 7a, 7b durch die Vorrichtung zu leiten und Chromspezies abzuscheiden, die von den Abgasen mitgeführt werden.

In einer vorteilhaften Ausführungsform umfasst das Brennstoffzellensystem 1 zusätzlich einen Nachbrenner 11, um im Abgas enthaltenes Brenngas, das im Zellstapel 2 nicht umgesetzt wurde, zu verbrennen. Im Betrieb werden dem Nachbrenner zweckmässigerweise die brenngashaltigen Abgase aus dem Auslass 4b und die sauerstoffhaltigen Abgase aus dem Auslass 4a zugeführt. Die Vorrichtung 10 kann vor oder, wie in Fig. 1 gezeigt, nach dem Nachbrenner 11 angeordnet sein, wobei in diesem Fall sowohl die gasförmigen Chromspezies aus dem Zellenstapel 2 als auch gegebenenfalls weitere gasförmige Chromspezies aus dem Nachbrenner, die im Abgas 7 enthalten sind, durch die Vorrichtung 10 geleitet werden.

In einer weiteren vorteilhaften Ausführungsform umfasst das Brennstoffzellensystem 1 zusätzlich eine Wärmedämmung 12, welche den Zellenstapel 2 und gegebenenfalls einen Nachbrenner 11 und/oder sonstigen Brenner des Brennstoffzellensystems umschliesst, wobei die Vorrichtung 10 mit Vorteil innerhalb der Wärmedämmung angeordnet ist.

Der Zellenstapel 2 enthält im Ausführungsbeispiel sogenannte Hochtemperaturbrennstoffzellen, beispielsweise Solid Oxide Fuel Cells (SOFC), die typisch bei einer Temperatur von 600°C bis 1000°C betrieben werden. Die Abgase 7 am Ausgang des Nachbrenners 11 können im Betrieb eine Temperatur von 1000°C erreichen. Falls eine Wärmedämmung 12 verwendet wird, beträgt die Temperatur im Innern 12' der Wärmedämmung typisch 500°C.

Bei Bedarf können im Brennstoffzellensystem 1 ein oder mehrere Wärmetauscher 9.1, 9.2 vorgesehen sein, um die Abwärme im Abgas zu nutzen, beispielsweise ein Wärmetauscher 9.1, der im Innern 12' der Wärmedämmung angeordnet ist, und durch den die Abgase 7.1 aus der Vorrichtung 10 geleitet werden, um zum Beispiel einen Sauerstoffträger 5 vor der Zufuhr zum Zellenstapel 2 zu erhitzen. Der Wärmetauscher 9.1 kann aber auch vor der Vorrichtung 10 angeordnet und direkt mit dem Nachbrenner 11 verbunden sein.

Weiter kann im Brennstoffzellensystem 1, wie in Fig. 1 gezeigt, ein zweiter Wärmetauscher 9.2 vorgesehen sein, durch den die Abgase 7.2 aus dem ersten Wärmetauscher geleitet werden. Der zweite Wärmetauscher wird mit Vorteil ausserhalb der Wärmedämmung angeordnet und kann beispielsweise mit einem Heizkreis 16 verbunden sein. Die Abgase 7.3 aus dem zweiten Wärmetauscher sind nun soweit abgekühlt, dass sie an die Umgebung abgegeben werden können, wobei bei Bedarf eine Kondensatwanne 13 vorgesehen sein kann, um Kondensat aus dem Abgas 7.3 aufzufangen.

Um hohe Wirkungsgrade zu erreichen, kann das Brennstoffzellensystem mit Brenngas-Rückführung betrieben werden. Dabei wird ein Teil des anodenseitigen Abgases des Zellenstapels, das unverbrauchtes Brenngas, und Wasserdampf enthält, direkt in den Brenngaszustrom gelenkt, um eine bessere Nutzung des Brennwertes zu erreichen und das vorhandene Wasser für die Reformierung, d.h. Aufbereitung des zugeführten Brenngases, zu benutzen. Da jedoch auch gasförmige Chromspezies von der Anodenseite der bipolaren Platten im Abgasstrom mitgeführt werden, sind die Katalysatormaterialien des Reformers gefährdet, und es kann bei hohen Chromkonzentrationen im Brenngas zu einer Beeinträchtigung der Anoden kommen.

Fig. 2 zeigt ein zweites Ausführungsbeispiel eines Brennstoffzellensystems gemäss vorliegender Erfindung mit Brenngas-Rückführung. Das in Fig. 2 gezeigte Brennstoffzellensystem 1 enthält einen Zellenstapel 2 zur Durchführung elektrochemischer Reaktionen, der mit Einlässen 3a, 3b für einen Sauerstoffträger 5, wie zum Beispiel Luft, und für Brenngas 6, wie zum Beispiel ein Kohlenwasserstoff, und mit Auslässen 4a 4b für Abgase 7a, 7b versehen ist. Das Brennstoffzellensystem 1 umfasst zusätzlich wenigstens eine Vorrichtung 10.1, 10.2 mit einer gasdurchlässigen Struktur, beispielsweise einer porösen oder wabenförmigen Struktur, welche eine Substanz enthält, die mit gasförmigen Chromspezies reagiert, oder welche mit einer derartigen Substanz versehen ist, wobei die Vorrichtung 10.1, 10.2 mit wenigstens einem der Auslässe 4a, 4b in Verbindung steht, um Abgase 7, 7a, 7b durch die Vorrichtung zu leiten und Chromspezies abzuscheiden, die von den Abgasen mitgeführt werden.

Das zweite Ausführungsbeispiel unterscheidet sich vom ersten Ausführungsbeispiel lediglich darin, das eine Anodengas-Rückführung vorgesehen ist. Auf eine Wiederholung der Beschreibung möglicher Ausführungsvarianten und -formen wird deshalb im Folgenden verzichtet, und es wird bezüglich möglicher Ausführungsvarianten und -formen auf die oben stehende Beschreibung des ersten Ausführungsbeispiels verwiesen.

In dem in Fig. 2 gezeigten Ausführungsbeispiel sind die Auslässe 4b für Abgase 7b, die nicht umgesetztes Brenngas enthalten, d.h. für die anodenseitigen Abgase, über eine Abzweigung und eine zusätzliche Vorrichtung 10.2 mit einer Brenngaszuführung 6¹ des Zellenstapels 2 verbunden sind, um Wasserdampf und nicht umgesetztes Brenngas zu rezirkulieren. Die zusätzliche Vorrichtung 10.2 umfasst eine gasdurchlässige Struktur, beispielsweise eine poröse oder wabenförmige Struktur, welche eine Substanz enthält, die mit gasförmigen Chromspezies reagiert, oder welche mit einer derartigen Substanz versehen ist, um die Abgase 7b, die nicht umgesetztes Brenngas enthalten, durch die Vorrichtung zu leiten und Chromspezies abzuscheiden, die von den Abgasen 7b mitgeführt werden. Die derart behandelten Abgase 7b₁ werden anschliessend zusammen mit frischem Brenngas 6 der Brenngaszuführung 6¹ zugeführt.

Brennstoffzellensysteme können auch als Hydrolysesysteme betrieben werden, beispielsweise als Hochtemperatur-Hydrolysesysteme (Reverse SOFC). Im Hydrolyse-Betrieb werden die elektrochemischen Zellen mit einem Strom beaufschlagt. Auf der Anodenseite erfolgt die Zersetzung von Wasserdampf in H₂ und O²⁻. Am Austritt verlassen H₂ und unverbrauchtes H₂O die Zelle. Die Ionen wandern durch den Feststoffelektrolyten auf die Kathodenseite, wo sie zu O₂ reagieren und durch ein Trägergas aus der Zelle befördert werden. Durch den hohen Wassergehalt auf der Anodenseite bilden sich über Chrom-haltigen Legierungen gasförmige Chromspezies, die wie im Fall des normalen Betriebs von Hochtemperatur-Brennstoffzellensystemen zu hohen Konzentrationen von hexavalentem Chrom im Kondensat führen. Falls als Trägergas Luft verwendet wird, enthält auch der mit O₂ angereicherte Massenstrom gasförmige Chromspezies.

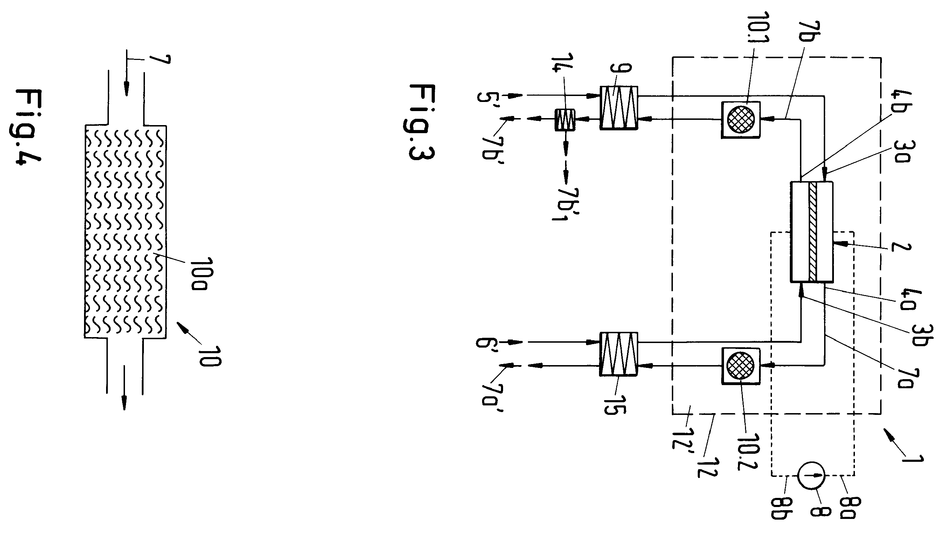

Fig. 3 zeigt ein drittes Ausführungsbeispiel eines Brennstoffzellensystems gemäss vorliegender Erfindung für Hydrolysebetrieb. Das in Fig. 3 gezeigte Brennstoffzellensystem 1 enthält einen Zellenstapel 2 zur Durchführung elektrochemischer Reaktionen, der mit Einlässen 3a, 3b für ein Trägergas 5', wie zum Beispiel Luft, und für Wasserdampf 6' und mit Auslässen 4a 4b für Abgase 7a, 7b versehen ist. Die Abgase 7a, 7b enthalten im Betrieb vorzugsweise Trägergas + O₂ beziehungsweise H₂ + Wasserdampf. Das Brennstoffzellensystem 1 umfasst zusätzlich wenigstens eine Vorrichtung 10.1 mit einer gasdurchlässigen Struktur, beispielsweise eine poröse oder wabenförmige Struktur, welche eine Substanz enthält, die mit gasförmigen Chromspezies reagiert, oder welche mit einer derartigen Substanz versehen ist, wobei die wenigstens eine Vorrichtung 10.1 mit dem Auslass 4b für H₂ - und Wasserdampf-haltige Abgase 7b in Verbindung steht, um dieselben durch die Vorrichtung zu leiten und Chromspezies abzuscheiden, die von den Abgasen mitgeführt werden.

Typisch kann der Zellenstapel 2 im dritten Ausführungsbeispiel über elektrische Zuleitungen 8a, 8b an eine elektrische Stromquelle 8 angeschlossen werden, um den Zellenstapel mit Strom zu beaufschlagen.

Bei Bedarf kann das Brennstoffzellensystem 1 zusätzlich eine zweite Vorrichtung 10.2 mit einer gasdurchlässigen Struktur, beispielsweise einer porösen oder wabenförmigen Struktur, umfassen, welche eine Substanz enthält, die mit gasförmigen Chromspezies reagiert, oder welche mit einer derartigen Substanz versehen ist, wobei die zweite Vorrichtung 10.2 mit dem Auslass 4a für O₂ -haltige Abgase 7a in Verbindung steht, um dieselben durch die Vorrichtung zu leiten und Chromspezies abzuscheiden, die von den Abgasen mitgeführt werden.

In einer weiteren vorteilhaften Ausführungsform umfasst das Brennstoffzellensystem 1 zusätzlich eine Wärmedämmung 12, welche die den Zellenstapel 2 umschliesst, wobei die Vorrichtungen 10.1, 10.2 mit Vorteil im Innern 12' der Wärmedämmung angeordnet sind.

Bei Bedarf können im Brennstoffzellensystem 1 ein oder mehrere Wärmetauscher 9 vorgesehen sein, um die Abwärme in den Abgasen 7a, 7b zu nutzen, beispielsweise ein Wärmetauscher 9, durch den H₂ - und Wasserdampf-haltige Abgase 7b aus der Vorrichtung 10.1 geleitet werden, um zum Beispiel ein Trägergas 5' vor der Zufuhr zum Zellenstapel 2 zu erhitzen. Fallweise kann im Brennstoffzellensystem 1, wie in Fig. 3 gezeigt, ein zweiter Wärmetauscher oder Verdampfer 15 vorgesehen sein, durch den die O₂ -haltige Abgase 7a geleitet werden, um Wasser 6' vor der Zufuhr zum Zellenstapel 2 zu verdampfen und/oder zu erhitzen. Die O₂ -haltigen Abgase 7a', können anschliessend ohne Gefährdung industriell weiterverwendet oder an die Umwelt abgegeben werden.

In einer vorteilhaften Ausführungsvariante enthält das Brennstoffzellensystem zudem, wie in Fig. 3 gezeigt, einen Kondenser 14 für die H₂ - und Wasserdampf-haltige Abgase 7b, um H₂, in Fig. 3 mit dem Bezugszeichen 7b' gekennzeichnet, vom Wasserdampf abzutrennen. Das dabei entstehende flüssige Wasser 7b₁' wird mit Vorteil dem Verdampfer 15 zugeführt.

Fig. 4 zeigt ein Ausführungsbeispiel einer Vorrichtung 10 gemäss vorliegender Erfindung für Brennstoffzellensysteme, welche einen Zellenstapel zur Durchführung elektrochemischer Reaktionen enthalten, der mit Einlässen für einen Sauerstoffträger und/oder ein Trägergas und für Brenngas und/oder Wasserdampf und mit Auslässen für Abgase versehen ist. Im Ausführungsbeispiel umfasst die Vorrichtung eine gasdurchlässige Struktur 10a, beispielsweise eine poröse oder wabenförmige Struktur, welche eine Substanz enthält, die mit gasförmigen Chromspezies reagiert, oder welche mit einer derartigen Substanz versehen ist, wobei die Vorrichtung mit wenigstens einem der Auslässe des Zellenstapels oder einem Nachbrenner des Brennstoffzellensystems koppelbar ist, um Abgase 7 durch die Vorrichtung zu leiten und Chromspezies abzuscheiden, die von den Abgasen mitgeführt werden.

Die gasdurchlässige Struktur der Vorrichtung ist vorteilhafterweise fest und kann aus Metalloberflächen gebildet werden, die beispielsweise wabenförmig angeordnet sind, und die mit der Substanz beschichtet sind, oder aus keramischem Schaum hergestellt sein, der die Substanz enthält oder der aus einem inerten keramischen Material wie beispielsweise Al₂O₃ besteht, das mit der Substanz beschichtet wurde, zum Beispiel mit Hilfe der Vakuuminfiltration. Der keramische Schaum kann zum Beispiel nach dem sogenannten Replica-Verfahren hergestellt werden. In diesem Verfahren wird ein PU-Schaum mit einem Keramikschlicker infiltriert und der überschüssige Keramikschlicker ausgequetscht. Der Keramikschlicker wird anschliessend getrocknet und einer Wärmebehandlung unterzogen. Während der Wärmebehandlung brennt der PU-Schaum aus und die Keramikmasse aus dem Keramikschlicker wird gesintert, wobei ein positives Abbild des PU-Schaumes entsteht.

Vorteilhafterweise ist die gasdurchlässige Struktur porös und weist eine Porenverteilung von 10 - 20 Poren pro 2,54 cm (pores per inch [ppi]) auf. Hierbei wird die Anzahl Poren auf einer linearen Achse angegeben. Eine entsprechende Klassifizierung findet sich beispielsweise in der ASTM-Norm D 3576-77.

In einer vorteilhaften Ausführungsvariante ist die mit gasförmigen Chromspezies reagierende Substanz ein Karbonat oder Oxid eines der Elemente Mg, Ca, Sr, Ba, Sc, Y, La sowie Lanthanoide oder ein Mischoxid von mindestens zwei der Elemente Mg, Ca, Sr, Ba, Sc, Y, La sowie Lanthanoide oder eine Oxidkeramik mit Perowskitstruktur sein. Oxidkeramiken mit Perowskitstruktur haben die Zusammensetzung ABO₃. Die A-Position in der Struktur können die Elemente Mg, Ca, Sr, Ba und Sc, Y, La sowie Lanthanoide einnehmen. Bei der B-Position sind rund 50 verschiedene Elemente bekannt. Typisch ist die B-Position zum Beispiel mit Ti, Zr, V, Nb, Mn, Fe, oder Co besetzt. Die A- oder B-Position kann jeweils auch von zwei unterschiedlichen Elementen besetzt sein. Derartige Kristalle werden Mischkristalle genannt. Eine typische Oxidkeramik mit Perowskitstruktur ist zum Beispiel La_{0.6}Sr_{0.4}CoO₃, das gut mit gasförmigen Chromspezies reagiert.

Mit Vorteil ist die Vorrichtung, abgesehen von Anschlüssen, in geschlossener Bauweise ausgeführt. Die gasdurchlässige Struktur kann dazu zum Beispiel in einem Rohr oder in einer Durchführung oder Öffnung des Brennstoffzellensystems angeordnet sein. Abhängig von der Grösse des Zellenstapels kann das Einbauvolumen der gasdurchlässigen Struktur zum Beispiel 50 cm³, 80 cm³ oder mehr betragen.

Ein Ausführungsbeispiel des erfindungsgemässen Verfahrens für Brennstoffzellensysteme, die einen Zellenstapel zur Durchführung elektrochemischer Reaktionen enthalten, der mit Einlässen für einen Sauerstoffträger und/oder ein Trägergas und für Brenngas und/oder Wasserdampf und mit Auslässen für Abgase versehen ist, wird im Folgenden an Hand der Figuren 1, 2 und 3 beschrieben. In dem Verfahren wird im Zellenstapel 2 eine elektrochemische Reaktion durchgeführt und Abgas erzeugt. Das Verfahren zeichnet sich dadurch aus, dass Abgas 7, 7a, 7b aus dem Zellstapel 2 durch eine Vorrichtung 10, 10.1 10.2 geleitet wird, die eine gasdurchlässige Struktur, beispielsweise eine poröse oder wabenförmige Struktur, umfasst, welche eine Substanz enthält, die mit gasförmigen Chromspezies reagiert, oder welche mit einer derartigen Substanz versehen ist, und dass in der Vorrichtung Chromspezies abgeschieden werden, die von den Abgasen 7, 7a, 7b mitgeführt werden. Typisch erfolgt die Abscheidung der Chromspezies in der Vorrichtung 10, 10.1 10.2 bei einer Temperatur von 450°C oder 500°C oder höher. Zweckmässigerweise umfassen die abgeschiedenen Chromspezies hexavalente Chromverbindungen.

Mit Vorteil wird das Abgas 7, 7a, 7b durch eine der in den vorangehenden Abschnitten beschriebenen Vorrichtungen geleitet.

In einer vorteilhaften Ausführungsform des Verfahrens ist die elektrochemische Reaktion stromerzeugend, wobei dem Zellenstapel 2 ein Brenngas 6 und ein Sauerstoffträger 5 zugeführt werden, und wobei das Abgas aus dem Zellenstapel 2 der Vorrichtung 10, 10.1 10.2 direkt oder über einen Nachbrenner 11 zugeführt wird.

In einer weiteren vorteilhaften Ausführungsform des Verfahrens ist die elektrochemische Reaktion eine Hydrolyse, wobei dem Zellenstapel 2 Wasserdampf 6' und ein Trägergas 5' sowie Strom zugeführt werden.

Das Brennstoffzellensystem sowie die Vorrichtung und das Verfahren für Brennstoffzellensysteme gemäss oben stehender Beschreibung haben den Vorteil, dass der Chromgehalt im Kondensat gegenüber herkömmlichen Brennstoffzellensystemen um mehr als 50 % gesenkt werden kann. Darüber hinaus erscheint es auf Grund von Hochrechnungen möglich, mit der oben beschriebenen Vorrichtung eine Lebensdauer von 40'000 h zu erreichen, so dass für die Vorrichtung keine zusätzliche Wartung notwendig ist.

## Patentansprüche

1. Brennstoffzellensystem (1) mit einem Zellenstapel (2) zur Durchführung elektrochemischer Reaktionen, der mit Einlässen (3a, 3b) für einen Sauerstoffträger (5) und/oder ein Trägergas (5') und für Brenngas (6) und/oder Wasserdampf (6') und mit Auslässen (4a, 4b) für Abgase (7a, 7b) versehen ist, wobei das Brennstoffzellensystem (1) wenigstens eine Vorrichtung (10, 10.1, 10.2) umfasst, welche mit wenigstens einem der Auslässe (4a, 4b) in Verbindung steht, um Abgase (7, 7a, 7b) durch die Vorrichtung zu leiten und Chromspezies abzuscheiden, die von den Abgasen mitgeführt werden,
**dadurch gekennzeichnet, dass**
die Vorrichtung (10, 10.1, 10.2) eine gasdurchlässige, poröse oder wabenförmige Struktur (10a) aufweist, welche eine Substanz enthält, die mit gasförmigen Chromspezies reagiert, oder welche mit einer derartigen Substanz versehen ist.

2. Brennstoffzellensystem nach Anspruch 1, wobei die gasdurchlässige Struktur (10a) aus Metalloberflächen gebildet wird, die mit der Substanz beschichtet sind, oder aus keramischem Schaum hergestellt ist, der die Substanz enthält oder der aus einem inerten keramischen Material besteht, das mit der Substanz beschichtet ist.

3. Brennstoffzellensystem nach einem der Ansprüche 1 oder 2 umfassend zusätzlich einen Nachbrenner (11), um im Abgas (7b) enthaltenes Brenngas, das im Zellstapel (2) nicht umgesetzt wurde, zu verbrennen, wobei die Vorrichtung (10, 10.1, 10.2) nach dem Nachbrenner angeordnet ist.

4. Brennstoffzellensystem nach einem der Ansprüche 1 bis 3, wobei die Auslässe (4b) für Abgase (7b), die nicht umgesetztes Brenngas enthalten, über eine Abzweigung und eine zusätzliche Vorrichtung (10.2) mit einer Brenngaszuführung des Zellenstapels (2) verbunden sind, um Wasserdampf und nicht umgesetztes Brenngas zu rezirkulieren, und wobei die zusätzliche Vorrichtung (10.2) eine gasdurchlässige Struktur (10a) umfasst, welche eine Substanz enthält, die mit gasförmigen Chromspezies reagiert, oder welche mit einer derartigen Substanz versehen ist.

5. Brennstoffzellensystem nach einem der Ansprüche 1 bis 4, wobei die Vorrichtung (10, 10.1, 10.2), abgesehen von Anschlüssen, in geschlossener Bauweise ausgeführt ist, und/oder wobei die Vorrichtung (10, 10.1, 10.2) ausserhalb des Zellenstapels (2) angeordnet ist.

6. Brennstoffzellensystem nach einem der Ansprüche 1 bis 5 umfassend zusätzlich eine Wärmedämmung (12), welche den Zellenstapel (2) umschliesst, wobei die Vorrichtung oder Vorrichtungen (10, 10.1, 10.2) innerhalb der Wärmedämmung (12) angeordnet sind.

7. Vorrichtung (10, 10.1, 10.2) für Brennstoffzellensysteme, welche einen Zellenstapel (2) zur Durchführung elektrochemischer Reaktionen enthalten, der mit Einlässen (3a, 3b) für einen Sauerstoffträger (5) und/oder ein Trägergas (5') und für Brenngas (6) und/oder Wasserdampf (6') und mit Auslässen (4a, 4b) für Abgase (7a, 7b) versehen ist, wobei die Vorrichtung (10, 10.1, 10.2) mit wenigstens einem der Auslässe des Zellenstapels oder einem Nachbrenner (11) des Brennstoffzellensystems koppelbar ist, um Abgase (7, 7a, 7b) durch die Vorrichtung zu leiten und Chromspezies abzuscheiden, die von den Abgasen mitgeführt werden,
**dadurch gekennzeichnet, dass**
die Vorrichtung (10, 10.1, 10.2) eine gasdurchlässige, poröse oder wabenförmige Struktur (10a) umfasst, welche eine Substanz enthält, die mit gasförmigen Chromspezies reagiert, oder welche mit einer derartigen Substanz versehen ist.

8. Vorrichtung nach Anspruch 7, wobei die gasdurchlässig Struktur (10a) aus Metalloberflächen gebildet wird, die mit der Substanz beschichtet sind, oder aus keramischem Schaum hergestellt ist, der die Substanz enthält oder der aus einem inerten keramischen Material besteht, das mit der Substanz beschichtet ist.

9. Vorrichtung nach einem der Ansprüche 7 oder 8, wobei die gasdurchlässige Struktur (10a) porös ist und eine Porenverteilung von 10 - 20 Poren pro 2,54 cm (pores per inch [ppi]) aufweist.

10. Vorrichtung nach einem der Ansprüche 7 bis 9 wobei die Substanz ein Karbonat oder Oxid eines der Elemente Mg, Ca, Sr, Ba, Sc, Y, La sowie Lanthanoide oder ein Mischoxid von mindestens zwei der Elemente Mg, Ca, Sr, Ba, Sc, Y, La sowie Lanthanoide oder eine Oxidkeramik mit Perowskitstruktur ist.

11. Vorrichtung nach einem der Ansprüche 7 bis 10, wobei die Vorrichtung (10, 10.1, 10.2), abgesehen von Anschlüssen, in geschlossener Bauweise ausgeführt ist.

12. Verfahren für Brennstoffzellensysteme, die einen Zellenstapel (2) zur Durchführung elektrochemischer Reaktionen enthalten, der mit Einlässen (3a, 3b) für einen Sauerstoffträger (5) und/oder ein Trägergas (5') und für Brenngas (6) und/oder Wasserdampf (6') und mit Auslässen (4a, 4b) für Abgase (7a, 7b) versehen ist, wobei im Zellenstapel eine elektrochemische Reaktion durchgeführt und Abgas erzeugt wird, wobei Abgas (7a, 7b) aus dem Zellstapel (2) durch eine Vorrichtung (10, 10.1, 10.2) geleitet wird, in der Chromspezies abgeschieden werden, die von den Abgasen mitgeführt werden,
**dadurch gekennzeichnet, dass**
die Vorrichtung (10, 10.1, 10.2) eine gasdurchlässige, poröse oder wabenförmige Struktur (10a) umfasst, welche eine Substanz enthält, die mit gasförmigen Chromspezies reagiert, oder welche mit einer derartigen Substanz versehen ist.

13. Verfahren nach Anspruch 12, wobei die abgeschiedenen Chromspezies hexavalente Chromverbindungen umfassen.

14. Verfahren nach einem der Ansprüche 12 oder 13, wobei die elektrochemische Reaktion stromerzeugend ist und dem Zellenstapel (2) ein Brenngas (6) und ein Sauerstoffträger (5) zugeführt werden, und wobei das Abgas (7a, 7b) aus dem Zellenstapel der Vorrichtung (10, 10.1, 10.2) direkt oder über einen Nachbrenner (11) zugeführt wird.

15. Verfahren nach einem der Ansprüche 12 oder 13, wobei die elektrochemische Reaktion eine Hydrolyse ist und dem Zellenstapel (2) Wasserdampf (6') und ein Trägergas (5') sowie Strom zugeführt werden.

## Claims

1. A fuel cell system (1) having a cell stack (2) for the carrying out of electrochemical reactions which is provided with inlets (3a, 3b) for an oxidant (5) and/or a carrier gas (5') and for fuel gas (6) and/or water vapor (6') and with outlets (4a, 4b) for exhaust gases (7a, 7b), wherein the fuel cell system (1) includes at least one apparatus (10, 10.1, 10.2) which is in communication with at least one of the outlets (4a, 4b) to direct exhaust gases (7, 7a, 7b) through the apparatus and to separate chromium species which are carried along by the exhaust gases, **characterized in that** the apparatus (10, 10.1, 10.2) has a gas-permeable porous or honeycomb structure (10a), which contains a substance which reacts with gaseous chromium species, or which is provided with such a substance.

2. A fuel cell system in accordance with claim 1, wherein the gas-permeable structure (10a) is formed from metal surfaces which are coated with the substance or is manufactured from ceramic foam which contains the substance or which is made from an inert ceramic material which is coated with the substance.

3. A fuel cell system in accordance with one of the claims 1 or 2, additionally including an afterburner (11) to combust fuel gas contained in the exhaust gas (7b) which was not converted in the cell stack (2), with the apparatus (10, 10.1, 10.2) being arranged after the afterburner.

4. A fuel cell system in accordance with any one of the claims 1 to 3, wherein the outlets (4b) for exhaust gases (7b) which contain unconverted fuel gas are connected via a branch and via an additional apparatus (10.2) to a fuel gas feed of the cell stack (2) to recirculate water vapor and unconverted fuel gas, and wherein the additional apparatus (10.2) includes a gas-permeable porous or honeycomb structure (10a) which contains a substance which reacts with gaseous chromium species or which is provided with such a substance.

5. A fuel cell system in accordance with any one of the claims 1 to 4, wherein the apparatus (10, 10.1, 10.2) is made in a closed construction, except for connectors, and/or wherein the apparatus (10, 10.1, 10.2) is arranged outside the cell stack (2).

6. A fuel cell system in accordance with any one of the claims 1 to 5, additionally including a thermal insulation (12) which surrounds the cell stack (2), wherein the single or plural apparatus (10, 10.1, 10.2) is/are arranged within the thermal insulation (12).

7. An apparatus (10, 10.1 10.2) for fuel cell systems which contain a cell stack (2) for the carrying out of electrochemical reactions which is provided with inlets (3a, 3b) for an oxidant (5) and/or a carrier gas (5') and for fuel gas (6) and/or water vapor (6') and with outlets (4a, 4b) for exhaust gases (7a, 7b) wherein the apparatus (10, 10.1, 10.2) can be coupled to at least one of the outlets of the cell stack or to an afterburner (11) of the fuel cell system to direct exhaust gases (7a, 7b) through the apparatus and to separate chromium species which are carried along by the exhaust gases **characterized in that** the apparatus (10, 10.1, 10.2) includes a gas-permeable porous or honeycomb structure (10a), which contains a substance which reacts with gaseous chromium species, or which is provided with such a substance.

8. An apparatus in accordance with claim 7, wherein the gas-permeable structure (10a) is formed from metal surfaces which are coated with the substance or is manufactured from ceramic foam which contains the substance or which is made from an inert ceramic material which is coated with the substance.

9. An apparatus in accordance with one of the claims 7 or 8, wherein the gas-permeable structure (10a) is porous and has a pore distribution of 10 - 20 pores per 2,54cm (pores per inch [ppi]).

10. An apparatus in accordance with any one of the claims 7 to 9, wherein the substance is a carbonate or oxide of one of the elements Mg, Ca, Sr, Ba, Sc, Y, La as well as lanthanoids or a mixed oxide of at least two of the elements Mg, Ca, Sr, Ba, Sc, Y, La and lanthanoids or an oxide ceramic with a perovskite structure.

11. An apparatus in accordance with any one of the claims 7 to 10, wherein the apparatus (10, 10.1, 10.2) is made in a closed construction apart from connectors.

12. A method for fuel cell systems which contain a cell stack (2) for the carrying out of electrochemical reactions which is provided with inlets (3a, 3b) for an oxidant (5) and/or a carrier gas (5') and for fuel gas (6) and/or water vapor (6') and with outlets (4a, 4b) for exhaust gases (7a, 7b), wherein an electrochemical reaction is carried out in the cell stack and exhaust gas is generated, wherein exhaust gas (7a, 7b) from the cell stack (2) is directed through an apparatus (10, 10.1 10.2), in that chromium species are separated in the apparatus which are carried along by the exhaust gases **characterized in that** the apparatus (10, 10.1 10.2) includes a gas-permeable porous or honeycomb structure (10a), which contains a substance which reacts with gaseous chromium species, or which is provided with such a substance.

13. A method in accordance with claim 12, wherein the separated chromium species include hexavalent chromium compounds.

14. A method in accordance with one of the claims 12 or 13, wherein the electrochemical reaction is current-producing and a fuel gas (6) and an oxidant (5) are supplied to the cell stack (2), and wherein the exhaust gas (7a, 7b) from the cell stack is supplied directly to the apparatus (10, 10.1, 10.2) or via an afterburner (11).

15. A method in accordance with one of the claims 12 or 13, wherein the electrochemical reaction is hydrolysis and water vapor (6') and a carrier gas (5') as well as current are supplied to the cell stack (2).

## Revendications

1. Système de pile à combustible (1) comportant un empilement de piles (2) pour la mise en oeuvre de réactions électrochimiques, qui est muni d'orifices d'admission (3a, 3b) pour un oxydant (5) et/ou un gaz porteur (5') et pour un gaz combustible (6) et/ou de la vapeur d'eau (6'), et d'orifices de sortie (4a, 4b) pour les gaz d'échappement (7a, 7b), dans lequel le système de pile à combustible (1) comprend au moins un dispositif (10, 10.1, 10.2), qui est relié à au moins l'un des orifices de sortie (4a, 4b) pour diriger les gaz d' échappement (7, 7a, 7b) à travers le dispositif et pour séparer les espèces de chrome qui sont entraînées par les gaz d'échappement,
**caractérisé en ce que**
le dispositif (10, 10.1, 10.2) présente une structure (10a) perméable au gaz, poreuse ou en forme de nids d'abeille, qui contient une substance qui réagit avec les espèces de chrome sous forme de gaz, ou qui est munie d'une telle substance.

2. Système de pile à combustible selon la revendication 1, dans lequel la structure perméable aux gaz (10a) est formée de surfaces métalliques qui sont recouvertes de la substance, ou est fabriquée à partir de mousse de céramique, qui contient la substance ou qui est fabriquée à partir d'un matériau de céramique inerte qui est recouvert de la substance.

3. Système de pile à combustible selon la revendication 1 ou 2, comprenant en outre un dispositif de postcombustion (11) pour brûler le gaz combustible contenu dans le gaz d'échappement (7b) qui n'a pas été converti dans l'empilement de piles (2), dans lequel le dispositif (10, 10.1, 10.2) est agencé après la chambre de postcombustion.

4. Système de pile à combustible selon la revendication 1, dans lequel les orifices de sortie (4b) pour les gaz d'échappement (7b) qui contiennent le gaz combustible non converti sont reliés par l'intermédiaire d'une branche et d'un dispositif supplémentaire (10.2) à une alimentation en gaz combustible de l'empilement de piles (2) pour faire recirculer la vapeur d'eau et le gaz combustible non converti, et dans lequel le dispositif supplémentaire (10.2) comprend une structure perméable aux gaz (10a), qui contient une substance qui réagit avec des espèces de chrome sous forme de gaz ou qui est munie d'une telle substance.

5. Système de pile à combustible selon l'une quelconque des revendications 1 à 4, dans lequel le dispositif (10, 10.1, 10.2) est réalisé selon une construction fermée, à l'exception des raccords, et/ou dans lequel le dispositif (10, 10.1, 10.2) est disposé à l'extérieur de l'empilement de piles (2).

6. Système de pile à combustible selon l'une quelconque des revendications 1 à 5, comprenant en outre un isolant thermique (12) qui entoure l'empilement de piles (2), dans lequel le ou les dispositifs (10, 10.1, 10.2) est/sont disposés à l'intérieur de l'isolant thermique (12).

7. Dispositif (10, 10.1, 10.2) pour des systèmes de pile à combustible comprenant un empilement de piles (2) pour la mise en oeuvre de réactions électrochimiques, qui est muni d'orifices d'admission (3a, 3b) pour un oxydant (5) et/ou un gaz porteur (5') et pour un gaz combustible (6) et/ou de la vapeur d'eau (6'), et d'orifices de sortie (4a, 4b) pour les gaz d'échappement (7a, 7b), dans lequel le dispositif (10, 10.1, 10.2) peut être couplé à au moins l'un des orifices de sortie de l'empilement de piles, pour diriger les gaz d'échappement (7, 7a, 7b) à travers le dispositif et pour séparer les espèces de chrome qui sont entraînées par les gaz d'échappement,
**caractérisé en ce que**
le dispositif (10, 10.1, 10.2) présente une structure perméable aux gaz (10a), poreuse ou en forme de nids d'abeille, qui contient une substance qui réagit avec les espèces de chrome sous forme de gaz, ou qui est munie d'une telle substance.

8. Dispositif selon la revendication 7, dans lequel la structure perméable aux gaz (10a) est formée de surfaces métalliques qui sont recouvertes de la substance, ou est fabriquée à partir de mousse de céramique, qui contient la substance ou qui est fabriquée à partir d'un matériau de céramique inerte qui est recouvert de la substance.

9. Dispositif selon la revendication 7 ou 8, dans lequel la structure perméable aux gaz (10a) est poreuse, et présente une distribution de pores de 10 à 20 pores pour 2,54 cm (pores par pouce [ppp]).

10. Dispositif selon l'une quelconque des revendications 7 à 9, dans lequel la substance est un carbonate ou un oxyde des éléments Mg, Ca, Sr, Ba, Sc, Y, La ainsi que lanthanides, ou un oxyde composite d'au moins deux des éléments Mg, Ca, Sr, Ba, Sc, Y, La ainsi que lanthanides, ou une céramique d'oxyde ayant une structure perovskite.

11. Dispositif selon l'une quelconque des revendications 7 à 10, dans lequel le dispositif (10, 10.1, 10.2), à l'exception des raccords, est réalisé selon une construction fermée.

12. Procédé pour des systèmes de piles à combustible contenant un empilement de piles (2) pour la mise en oeuvre de réactions électrochimiques, qui est muni d'orifices d'admission (3a, 3b) pour un oxydant (5) et/ou un gaz porteur (5') et pour un gaz combustible (6) et/ ou de la vapeur d'eau (6'), et d'orifices de sortie (4a, 4b) pour les gaz d'échappement (7a, 7b), dans lequel une réaction électrochimique survient dans la pile de cellules, et des gaz d'échappement sont générés, dans lequel les gaz d'échappement (7a, 7b) vont être dirigés à l'extérieur de l'empilement de piles (2) à travers un dispositif (10, 10.1, 10.2), dans lequel les espèces de chrome qui sont entraînées par les gaz d'échappement sont séparées,
**caractérisé en ce que**
le dispositif (10, 10.1, 10.2) comprend un structure perméable aux gaz, poreuse ou en forme de nids d'abeille (10a), qui contient une substance qui réagit avec les espèces de chrome sous forme de gaz, ou qui est munie d'une telle substance.

13. Procédé selon la revendication 12, dans lequel les espèces de chrome séparées comprennent des composés de chrome hexavalent.

14. Procédé selon la revendication 12 ou 13, dans lequel la réaction électrochimique produit de l'électricité, et un gaz combustible (6) et un oxydant (5) sont alimentés vers l'empilement de piles (2), et dans lequel les gaz d'échappement (7a, 7b) sont dirigés à l'extérieur de l'empilement de piles du dispositif (10, 10.1, 10.2) directement ou par l'intermédiaire d'un dispositif de postcombustion (11).

15. Procédé selon la revendication 12 ou 13, dans lequel la réaction électrochimique est une hydrolyse, et de la vapeur d'eau (6') et un gaz porteur (5') ainsi du courant peuvent être alimentés vers l'empilement de piles (2).
